# EUROPEAN PATENT SPECIFICATION

(11) **EP 4 322 273 B1**
(45) Date of publication and mention of the grant of the patent: **04.02.2026**
(21) Application number: 22911930.0
(22) Date of filing: 21.12.2022
(51) Int. Cl.: H01M 10/04, H01M 50/466, H01M 10/0583, H01M 10/0525

(54) **ELECTRODE ASSEMBLY AND MANUFACTURING METHOD THEREFOR**
ELEKTRODENANORDNUNG UND HERSTELLUNGSVERFAHREN DAFÜR
ENSEMBLE ÉLECTRODE ET SON PROCÉDÉ DE FABRICATION

(30) Priority: 23.12.2021 KR 20210185877
(43) Date of publication of application: 14.02.2024
(73) Proprietor: LG Energy Solution, Ltd., Seoul 07335 (KR)
(72) Inventor: YUN, Seongmin, Daejeon 34122 (KR); KONG, Tae Yoon, Daejeon 34122 (KR); KWON, Hyunjung, Daejeon 34122 (KR)
(74) Representative: Plasseraud IP
(86) International application number: PCT/KR2022/020967
(87) International publication number: WO 2023/121297

(56) References cited:
- JP-A- 2014 165 055
- JP-A- 2016 103 425
- KR-A- 20130 132 230
- KR-A- 20180 051 072
- KR-A- 20200 023 853
- KR-A- 20200 023 853
- KR-A- 20200 088 067
- US-A1- 2020 227 787

## Description

### [Technical Field]

This application claims priority to and the benefit of Korean Patent Application No. 10-2021-0185877 filed with the Korean Intellectual Property Office on December 23, 2021.

The present invention relates to an electrode assembly and a method of manufacturing an electrode assembly.

### [Background Art]

Unlike primary batteries, secondary batteries may be rechargeable and have small scales and high capacities. Recently, research and development have been actively conducted on secondary batteries. As development of technologies and demands for mobile devices are increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a Jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

In this case, in the stack-and-folding type electrode assembly, a bonding force between electrodes and a separator is low in an initial step in which the separator is folded in a zigzag manner and positioned between the electrodes. For this reason, there is a problem of a pull-back phenomenon in which the separator is pushed inward, the electrode is exposed, and a risk of a short circuit is increased.

### <Document of Related Art>

Korean Patent Application Laid-Open No. 10-2013-0132230
KR 20200023853 A discloses an electrode assembly manufacturing equipment. US 2020/0227787 A1 discloses a stack type jelly roll for secondary battery, battery cell including the same, battery pack including the same, and method of manufacturing the same. JP 2016103425 A discloses a zigzag lamination body structure for secondary battery.

### [Detailed Description of the Invention]

### [Technical Problem]

The present invention is intended to provide an electrode assembly and a method of manufacturing an electrode assembly.

### [Technical Solution]

An embodiment of the present invention provides a method of manufacturing an electrode assembly, in which a first electrode and a second electrode are alternately disposed between folded separators, the method is laid out in appended claim 1.

Another embodiment of the present invention provides an electrode assembly manufactured by the manufacturing method, in which the electrode assembly is configured such that the first electrode and the second electrode are alternately disposed between the folded separators, and all surfaces of the electrode at a lowermost end of the assembly are surrounded by the separator.

### [Advantageous Effects]

According to the electrode assembly and the method of manufacturing the same according to the embodiment of the present application, it is possible to prevent a problem of a pull-back phenomenon in which the separator is pushed inward, the electrode is exposed, and a risk of a short circuit is increased during the process of manufacturing the electrode assembly manufactured by stacking the electrode and the separator.

That is, the electrode assembly and the method of manufacturing the same according to the embodiment of the present application may improve stability of the battery.

The method of manufacturing an electrode assembly according to the embodiment of the present application may manufacture the electrode assembly with uniform performance and align and fix the electrode and the separator so that the position of the electrode and the position of the separator are not distorted. Therefore, it is possible to improve energy density and prevent the electrode of the electrode assembly from protruding to the external appearance of the battery.

### [Brief Description of Drawings]

FIGS. 1 to 3 are views exemplarily illustrating an electrode assembly manufacturing method according to an embodiment of the present invention.
FIG. 4 is a top plan view exemplarily illustrating an electrode assembly manufacturing apparatus that may perform the electrode assembly manufacturing method according to the embodiment of the present invention.
FIG. 5 is a front view illustrating a concept of the electrode assembly manufacturing apparatus that may perform the electrode assembly manufacturing method according to the embodiment of the present invention.
FIG. 6 is a cross-sectional view exemplarily illustrating an electrode assembly manufactured by the electrode assembly manufacturing method according to the embodiment of the present invention.
FIG. 7 is a perspective view illustrating a press part of the electrode assembly manufacturing apparatus that may perform the electrode assembly manufacturing method according to the embodiment of the present invention.
FIG. 8 is a perspective view exemplarily illustrating a state in which the press part of the electrode assembly manufacturing apparatus, which may perform the electrode assembly manufacturing method according to the embodiment of the present invention, presses a stacked object.
FIG. 9A is a perspective view illustrating a first press part 50 according to the embodiment of the present invention, and FIG. 9B is a perspective view illustrating a second press part 60 according to the embodiment of the present invention.
FIG. 10 is a perspective view illustrating a stack table of the electrode assembly manufacturing apparatus that may perform the electrode assembly manufacturing method according to the embodiment of the present invention.
FIG. 11 is a perspective view illustrating a separator supply part of the electrode assembly manufacturing apparatus that may perform the electrode assembly manufacturing method according to the embodiment of the present invention.
FIG. 12 is a perspective view illustrating a first electrode seating table of the electrode assembly manufacturing apparatus that may perform the electrode assembly manufacturing method according to the embodiment of the present invention.
FIG. 13 is a perspective view illustrating a second electrode seating table of the electrode assembly manufacturing apparatus that may perform the electrode assembly manufacturing method according to the embodiment of the present invention.
FIG. 14 is a perspective view illustrating a first suction head of the electrode assembly manufacturing apparatus that may perform the electrode assembly manufacturing method according to the embodiment of the present invention.
FIG. 15 is a bottom plan view illustrating the first suction head of the electrode assembly manufacturing apparatus that may perform the electrode assembly manufacturing method according to the embodiment of the present invention.
FIG. 16 is a top plan view illustrating a holding mechanism and the stack table of the electrode assembly manufacturing apparatus that may perform the electrode assembly manufacturing method according to the embodiment of the present invention.
FIG. 17 is a front view illustrating a concept of the electrode assembly manufacturing apparatus that may perform an electrode assembly manufacturing method according to another embodiment of the present invention.

### [Explanation of Reference Numerals and Symbols]

10: Electrode assembly
11: First electrode
11a: First electrode tab
12: Second electrode
12a: Second electrode tab
14: Separator
100, 200: Electrode assembly manufacturing apparatus
110: Stack table
111: Table body
112: Stack table heater
120: Separator supply part
121: Separator heating part
121a: Body
121b: Separator heater
122: Separator roll
130: First electrode supply part
131: First electrode seating table
132: First electrode heater
133: First electrode roll
134: First cutter
135: First conveyor belt
136: First electrode supply head
140: Second electrode supply part
141: Second electrode seating table
142: Second electrode heater
143: Second electrode roll
144: Second cutter
145: Second conveyor belt
146: Second electrode supply head
150: First electrode stacking part
151: First suction head
151a: Vacuum inlet
151b: Bottom surface
152: First head heater
153: First movement part
160: Second electrode stacking part
161: Second suction head
162: Second head heater
163: Second movement part
170: Holding mechanism
171: First holding mechanism
172: Second holding mechanism
180: Press part
181: First pressing block
182: Second pressing block
183, 184: Press heater
290: Vision device
291: First camera
292: Second camera
R: Rotation part
S: Stacked object

### [Detailed Description]

Hereinafter, exemplary embodiments of the present invention will be described in detail so that those with ordinary skill in the art to which the present invention pertains may easily carry out the exemplary embodiments. However, the present invention may be implemented in various different ways and is not limited to the embodiments described herein.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, a configuration in which 'a separator is folded to surround all surfaces of an electrode' means that the separator is wound one or more times to surround the electrode while adjoining the electrode.

In the present specification, a configuration in which 'a particular object is heated' means that the particular object is heated. The configuration in which 'the particular object is pressed while being heated' means that the particular object is heated and pressed.

Further, in the description of the present invention, the specific descriptions of well-known related technologies will be omitted when it is determined that the specific descriptions may unnecessarily obscure the subject matter of the present invention.

An embodiment of the present invention provides a method of manufacturing an electrode assembly, in which first electrodes and second electrodes are alternately disposed between folded separators, the method including: supplying the first electrode to a stack table; supplying the second electrode to the stack table; supplying the separator to the stack table; winding the first electrode, which is stacked on the stack table first after the separator is stacked on the stack table first, with the separator one or more times; and manufacturing a stacked object by stacking the first electrode, the separator, and the second electrode on the stack table such that the first electrode and the second electrode are alternately disposed between the folded separators while stacking the second electrode after the winding of the first electrode with the separator one or more times.

That is, according to the electrode assembly manufacturing method according to the present invention, the first electrode, which is supplied to the stack table first, is wound one or more times so as to be surrounded by the separator after the separator is supplied to the stack table.

In the present specification, a configuration in which the first electrode and the second electrode are stacked such that the first electrode and the second electrode are alternately disposed between the folded separators is referred to as zigzag folding.

In the embodiment of the present invention, the winding of the first electrode, which is stacked on the stack table first after the separator is stacked on the stack table first, with the separator one or more times may include: stacking the separator on the stack table so that the separator is stacked on the stack table first; stacking the first electrode on the separator stacked first; and winding the first electrode, which is stacked on the separator stacked first, with the separator one or more times. That is, the separator may be stacked on the stack table first before the first electrode and the second electrode are stacked.

In the embodiment of the present invention, the winding of the first electrode, which is stacked on the stack table first after the separator is stacked on the stack table first, with the separator one or more times may include: stacking the second electrode on the stack table so that the second electrode is stacked on the stack table first; stacking the separator first on the stacked second electrode; stacking the first electrode on the separator stacked first; and winding the first electrode, which is stacked on the separator stacked first, with the separator one or more times. That is, the second electrode may be stacked on the stack table before the separator is stacked.

In the present specification, the winding of the first electrode with the separator one or more times may mean folding the separator so that the separator surrounds all the surfaces of the first electrode. That is, in the present specification, the winding of the first electrode with the separator one or more times may be expressed as a step of folding the separator so that the separator surrounds all the surfaces of the electrode.

In other words, the configuration in which 'the separator is folded to surround all the surfaces of the electrode' means that the separator is wound one or more times to surround the electrode while adjoining a surface of the electrode.

In this case, all the surfaces of the electrode mean upper and lower surfaces of the electrode and a surface of the electrode in a direction perpendicular to a supply direction of the separator. In this case, the "lower surface" means a surface of the electrode directed toward the stack table, and the "upper surface" means a surface opposite to the surface of the electrode directed toward the stack table. In addition, the surfaces of the electrode in a direction perpendicular to the supply direction of the separator mean a surface of the electrode, which comes into contact with a surface of the folded separator and a surface opposite to the surface of the electrode that comes into contact with the surface of the folded separator during a process in which general zigzag folding is performed on the stacked object along a stack axis.

That is, all the surfaces of the electrode mean surfaces of the electrode that may come into contact with the electrode during the process of stacking the separator.

Like the electrode assembly manufacturing method of the present application, the separator is wound one or more times so that the separator surrounds all the surfaces of the electrode, which is supplied to the stack table first after the separator is supplied to the stack table, which makes it possible to reduce a problem of a pull-back phenomenon in which the electrode and the separator are separated, and the position of the electrode or the position of the separator is pushed rearward during the process of manufacturing the electrode assembly so that the separator is folded in a zigzag manner so as to be positioned between the first electrode and the second electrode. Therefore, the position of the electrode and the position of the separator may be aligned and fixed without being distorted, which makes it possible to improve energy density and prevent the electrode of the electrode assembly from protruding to an external appearance of a battery.

According to the embodiment of the present invention, the winding of the first electrode one or more times may include winding the first electrode once. In case that the number of times of the winding is limited to one, a process speed may be increased.

According to the embodiment of the present invention, the manufacturing of the stacked object by stacking the first electrode, the separator, and the second electrode on the stack table such that the first electrode and the second electrode are alternately disposed between the folded separators while stacking the second electrode after the winding of the first electrode with the separator one or more times may further include winding the first electrode, which is supplied to the stack table last, with the separator one or more times.

According to the embodiment of the present invention, the manufacturing of the stacked object by stacking the first electrode, the separator, and the second electrode on the stack table such that the first electrode and the second electrode are alternately disposed between the folded separators while stacking the second electrode after the winding of the first electrode with the separator one or more times may further include: winding the first electrode, which is supplied to the stack table last, with the separator one or more times; and stacking the second electrode on the separator wound one or more times.

In general, an outer portion of the electrode, which is supplied first, and an outer portion of the electrode, which is supplied last, are portions, where the bonding force with the separator is lowest, and are major factors of the pull-back phenomenon in which the electrode and the separator are separated, and the position of the electrode or the separator is pushed rearward during the process of manufacturing the electrode assembly. Therefore, according to the electrode assembly manufacturing method according to the present invention, the separator is folded to surround not only all the surfaces of the electrode, which is supplied first, but also all the surfaces of the electrode, which is supplied last, which makes it possible to more effectively reduce a problem of a pull-back phenomenon in which the electrode and the separator are separated, and the position of the electrode or the position of the separator is pushed rearward during the process of manufacturing the electrode assembly so that the separator is folded in a zigzag manner so as to be positioned between the first electrode and the second electrode.

According to the embodiment of the present invention, the supplying of the first electrode to the stack table, the supplying of the second electrode to the stack table, and the supplying of the separator to the stack table may supply the first electrode, the second electrode, and the separator to the stack table while heating the first electrode, the second electrode, and the separator.

In the embodiment of the present application, the manufacturing of the stacked object by stacking the first electrode, the separator, and the second electrode on the stack table such that the first electrode and the second electrode are alternately disposed between the folded separators may include:
(S1) stacking the separator on the stack table;
(S2) stacking the first electrode on an upper surface of the separator;
(S3) additionally supplying the separator to cover an upper surface of the first electrode;
(S4) stacking the second electrode on a surface of the separator opposite to the surface of the separator that covers the upper surface of the first electrode and is in contact with the first electrode; and
(S5) additionally supplying the separator to cover an upper surface of the second electrode, in which steps S1 to S5 are repeated one or more times.

In the embodiment of the present application, the separator may be supplied in the form of a separator sheet. That is, the separator, which is additionally supplied, may be continuously supplied. In addition, the "upper surface" may mean a surface opposite to the surface of the separator or the electrode facing the stack table.

In this case, the additional supplying of the separator to cover the upper surface of the first electrode (S3) and the additional supplying of the separator to cover the upper surface of the second electrode (S5) may be performed by one of a method of moving the stack table leftward and rightward, a method of moving the separator leftward and rightward, and a method of rotating the stack table.

That is, in the embodiment of the present application, the method of moving the stack table leftward and rightward, the method of moving the separator leftward and rightward, or the method of rotating the stack table may be used to stack the first electrode, the separator, and the second electrode such that the first electrode and the second electrode are alternately disposed between the folded separators. A typical technology in the corresponding field may be applied to this configuration. Particularly, the method of rotating the stack table may be used. In case that the method of rotating the stack table is used, the first electrode may be more easily wound with the separator one or more times, thereby improving the process efficiency.

According to the embodiment of the present invention, the winding of the electrode one or more times may wind the electrode only once.

According to the embodiment of the present invention, the method may further include a heat-press step of heating and pressing the stacked object.

More specifically, according to the embodiment of the present invention, the heat-press step of heating and pressing the stacked object may include: heating the stacked object by heating the stack table body; and surface-pressing the stacked object by a pair of pressing blocks that moves in directions toward each other along the stack axis.

More specifically, according to the embodiment of the present invention, the heat-press step of heating and pressing the stacked object may include: surface-pressing the stacked object as a pair of pressing blocks including press heaters moves in directions toward each other along the stack axis; and heating the stacked object by the press heater while the stacked object is surface-pressed.

In the embodiment of the present invention, the heat-press step of heating and pressing the stacked object may further include conveying the stacked object to heat and press the stacked object. More specifically, the method may further include: gripping, by a gripper, the stacked object stacked on the stack table; and conveying the stacked object to heat and press the stacked object gripped by the gripper.

According to the embodiment of the present invention, the heating of the stacked object of the heat-press step may be performed in, but not limited to, a temperature condition of 30°C or more and 100°C or less, and particularly 35°C or more and 95°C or less.

According to the embodiment of the present invention, the pressing of the stacked object of the heat-press step may be performed in a pressure condition of 1 MPa or more and 5 MPa or less, and particularly **1.5** MPa or more and 5 MPa or less.

According to the embodiment of the present invention, the heating and pressing of the stacked object of the heat-press step may be performed for 5 seconds or more and 60 seconds or less, and particularly 5 seconds or more and 30 seconds or less.

According to the embodiment of the present invention, the heat-press step of heating and pressing the stacked object may include heating and pressing the stacked object in a temperature condition of 30°C or more and 100°C or less, in a pressure condition of 1 MPa to 5 MPa, for 5 seconds to 60 seconds, and particularly in a temperature condition of 35°C or more and 95°C or less, in a pressure condition of **1.5** MPa to 5 MPa, for 5 seconds to 30 second. However, the present invention is not limited thereto.

In addition, in the embodiment of the present invention, the heat-press step of heating and pressing the stacked object may include: a first heat-press step of gripping, by the gripper, the stacked object and heating and pressing the stacked object; and a second heat-press step of stopping the gripping by the gripper and heating and pressing the stacked object after the first heat-press step.

In the embodiment of the present application, the first heat-press step may include: fixing the stacked object by pressing an upper surface of the stacked object by using the gripper; moving the stacked object fixed by the gripper between the pair of pressing blocks including the press heater; surface-pressing the fixed stacked object as the pair of pressing blocks move in the directions toward each other along the stack axis of the stacked object; and heating the fixed stacked object with the press heater.

In the embodiment of the present application, the second heat-press step may include: stopping the heating and pressing of the stacked object after the first heat-press step; moving the gripper away from the stacked object; moving the stacked object, which is moved away from the gripper, between the pair of pressing blocks including the press heater; pressing the stacked object as the pair of pressing blocks moves in the directions toward each other along the stack axis of the stacked object which is moved away from the gripper; and pressing the stacked object by the press heater.

In the embodiment of the present application, the pressing block used in the first heat-press step may have a groove corresponding to the gripper.

In the embodiment of the present application, the moving of the gripper away from the stacked object may include: stopping the pressing of the upper surface of the stacked object by using the gripper; and moving the gripper away from the stacked object.

In addition, the moving of the stacked object between the pair of pressing blocks including the press heaters in the heat-press step (including the first and second heat-press steps) may include moving not only the stacked object but also the stacked object in the state in which the stacked object is placed on the stack table. In this case, the objects to be heated and pressed by the pair of pressing blocks and the press heater may mean the stacked object and the stack table.

In the embodiment of the present application, the temperature, pressure, and time conditions of the first and second heat-press steps may satisfy the above-mentioned ranges of the temperature, pressure, and time condition of the heat-press step.

When the temperature, pressure, and time condition is satisfied, it is possible to minimize damage to a unit electrode, which constitutes the electrode assembly, and ensure a bonding force and permeability at an appropriate level between the electrode and the separator that constitute the electrode assembly.

In the embodiment of the present invention, the first electrode may be a positive electrode, and the second electrode may be a negative electrode.

In the embodiment of the present invention, the first electrode may be a negative electrode, and the second electrode may be a positive electrode.

In the embodiment of the present invention, the method may further include gripping the first electrode or the second electrode stacked on the stack table by using a holding mechanism and fixing the first electrode or the second electrode to the stack table.

In the present specification, the "holding mechanism" serves to grip the stacked object stacked on the stack table in order to stack the first electrode or the second electrode during the process of manufacturing the stacked object in which the first electrode, the separator, and the second electrode are stacked such that the first electrode and the second electrode are alternately disposed between the folded separators on the stack table. The holding mechanism is different in function from the gripper that grips the stacked object during the process of heating and pressing the stacked object.

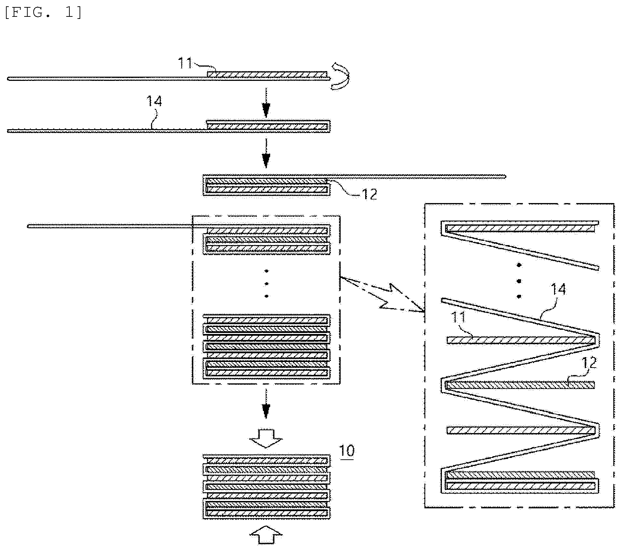

FIG. 1 is a view exemplarily illustrating the method of manufacturing an electrode assembly according to the embodiment of the present invention. More specifically, FIG. 1 is a view illustrating a case in which the first electrode is the above-mentioned first electrode. Referring to FIGS. 1, 4, and 5, a separator 14 is stacked on a stack table 111 by supplying the separator 14 to the stack table 111 first before supplying a first electrode 11 or a second electrode 12. The first-first electrode 11 is stacked on the stacked separator 14 by supplying the first-first electrode 11 to the stack table, the separator 14 is wound one or more times to adjoin and surround all surfaces of the first-first electrode 11 (the upper and lower surfaces of the first electrode 11 and the surface of the first electrode 11 in the direction perpendicular to the supply direction of the separator 14), and the separator is folded to surround all the surfaces of the electrode supplied to the stack table 111 first. Thereafter, an electrode assembly 10 is manufactured by stacking the first electrode 11 and the second electrode 12 such that the first electrode 11 and the second electrode 12 are alternately disposed between the folded separators 14 on the stack table 111. As can be seen in FIG. 1, all the surfaces of only the first-first electrode 11 are in contact with the separator, and one surface of each of the other electrodes is not in contact with the separator.

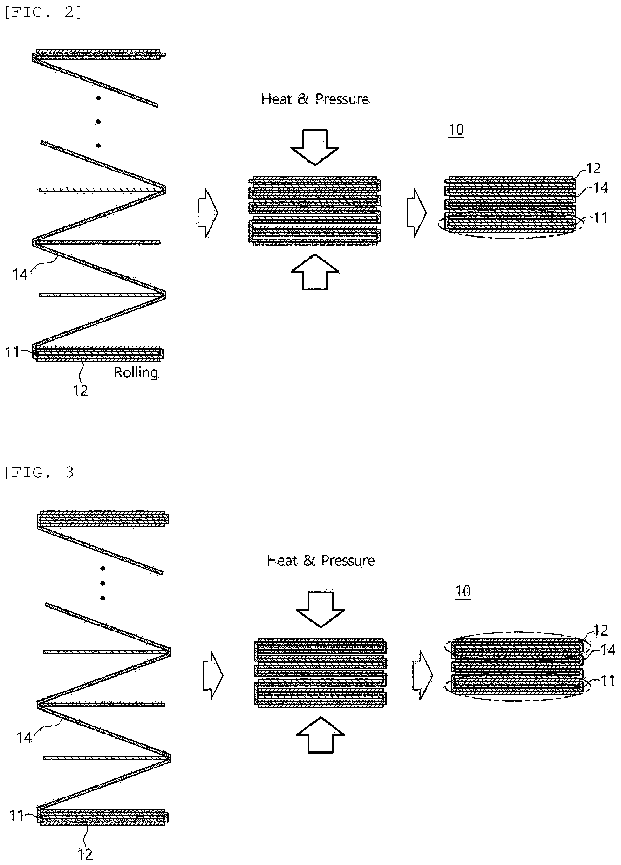

FIG. 2 is a view exemplarily illustrating a method of manufacturing an electrode assembly according to another embodiment of the present invention. Referring to FIGS. 2, 4, and 5, the method of manufacturing the electrode assembly according to the embodiment of the present invention illustrated in FIG. 2 stacks the second electrode 12 on the stack table 111 first and then stacks the separator 14. That is, in comparison with FIG. 1, the method identical to the method illustrated in FIG. 1 is performed, except that after the second electrode 12 and the separator 14 are stacked on the stack table 111 first, and the first electrode 11, which is supplied first, is wound with the separator 14 one or more times, such that the separator 14 adjoins and surrounds all the surfaces of the first electrode (the upper and lower surfaces of the first electrode 11 and the surface of the first electrode 11 in the direction perpendicular to the supply direction of the separator 14). As a result, as can be seen in FIG. 2, the second electrode 12 is stacked at a lowermost end of the manufactured electrode assembly 10, and thereafter, all the surfaces of only the stacked first-first electrode 11 are in contact with the separator, and one surface of each of the other electrodes is not in contact with the separator.

FIG. 3 is a view exemplarily illustrating a method of manufacturing an electrode assembly according to still another embodiment of the present invention. Referring to FIGS. 3 to 5, like FIG. 2, the method of manufacturing the electrode assembly according to the embodiment of the present invention illustrated in FIG. 3 stacks the second electrode 12 on the stack table 111 first and then stacks the separator 14. However, the method in FIG. 3 is different from the method illustrated in FIG. 2 in that not only the first electrode 11, which is stacked on the stack table 111 first, but also the first electrode 11, which is stacked last, are wound with the separator 14 one or more times so that the separator 14 adjoins and surrounds all the surfaces of the first electrode 11 stacked last (the upper and lower surfaces of the first electrode 11 and the surface of the first electrode 11 in the direction perpendicular to the supply direction of the separator 14). As a result, as can be seen in FIG. 3, the first electrode 11, which is stacked at a lowermost end of the manufactured electrode assembly 10, and the first electrode 11, which is stacked at an uppermost end of the manufactured electrode assembly 10, are configured such that all the surfaces of the first electrode 11 are in contact with the separator 14, and one surface of each of the other electrodes is not in contact with the separator. In addition, the second electrodes 12 are respectively stacked at the lowermost and uppermost ends of the electrode assembly 10.

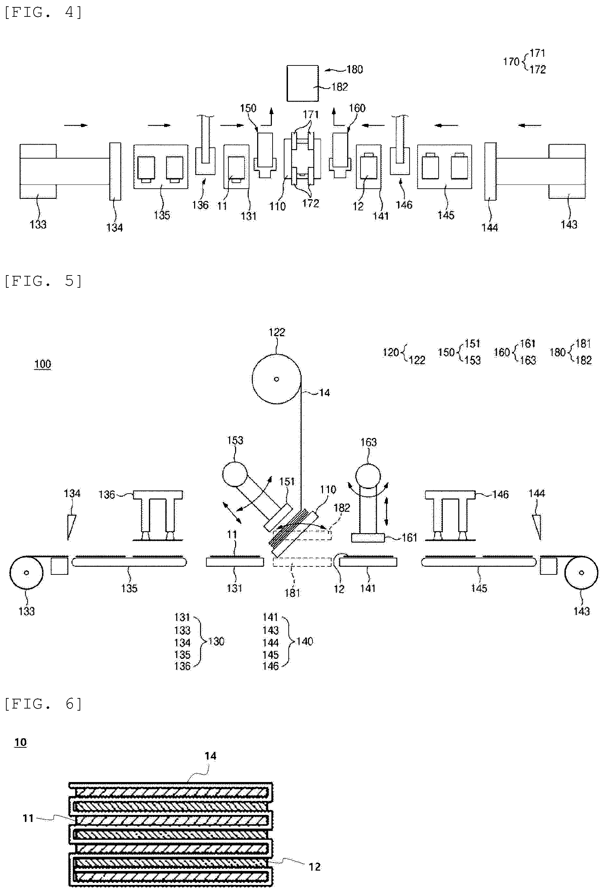

FIG. 4 is a top plan view exemplarily illustrating an electrode assembly manufacturing apparatus that may perform the electrode assembly manufacturing method according to the embodiment of the present invention, and FIG. 5 is a front view illustrating a concept of the electrode assembly manufacturing apparatus that may perform the electrode assembly manufacturing method according to the embodiment of the present invention. In this case, for convenience, a separator supply part 120 illustrated in FIG. 5 is omitted in FIG. 4. A holding mechanism 170 illustrated in FIG. 4 is omitted in FIG. 5. A press part 180 positioned at a rear side in the top plan view is indicated by the dotted line.

Referring to FIGS. 1 to 6, an electrode assembly manufacturing apparatus 100 according to the embodiment of the present invention includes a stack table 110, the separator supply part 120 configured to supply the separator 14, a first electrode supply part 130 configured to supply the first electrode 11, a second electrode supply part 140 configured to supply the second electrode 12, a first electrode stacking part 150 configured to stack the first electrode 11 on the stack table 110, a second electrode stacking part 160 configured to stack the second electrode 12 on the stack table 110, and the press part 180 configured to bond the first electrode 11, the separator 14, and the second electrode 12. In addition, the electrode assembly manufacturing apparatus 100 according to the embodiment of the present invention may further include the holding mechanism 170 configured to fix the first electrode 11 and the second electrode 12 when the first electrode 11 and the second electrode 12 are stacked on the stack table 110.

In this case, as described above, the first electrode, the second electrode, and the separator may be supplied while being heated.

FIG. 6 is a cross-sectional view exemplarily illustrating an electrode assembly manufactured by the electrode assembly manufacturing method according to the embodiment of the present invention. Specifically, FIG. 6 illustrates the electrode assembly 10 manufactured by the method illustrated in FIG. 1. As described above, all the surfaces of only the first electrode are in contact with the separator, and one surface of each of the other electrodes is not in contact with the separator.

### [Mode for Invention]

Hereinafter, a method capable of performing the electrode assembly manufacturing method according to the embodiment of the present invention will be described in detail with reference to the electrode assembly manufacturing apparatus illustrated in FIGS. 1 to 17 as an example. That is, FIGS. 1 to 17 are views exemplary illustrating the electrode assembly manufacturing apparatus that may perform the electrode assembly manufacturing method, but the present invention is not limited thereto.

Specifically, the electrode assembly manufacturing apparatus is an apparatus for manufacturing an electrode assembly by stacking the first electrode, the separator, and the second electrode, and may include: the stack table configured to stack the first electrode, the separator, and the second electrode such that the first electrode and the second electrode are alternately disposed between the folded separators; the separator supply part configured to supply the separator; the first electrode supply part configured to supply the first electrode; the second electrode supply part configured to supply the second electrode; the first electrode stacking part configured to stack the first electrode, which is supplied from the first electrode supply part, on the stack table; the second electrode stacking part configured to stack the second electrode, which is supplied from the second electrode supply part, on the stack table; and the press part configured to bond the first electrode, the separator, and the second electrode by heating and pressing the first electrode, the separator, and the second electrode which are stacked.

In this case, the separator supply part, the first electrode supply part, and the second electrode supply part may serve to supply the separator, the first electrode, and the second electrode while heating the separator, the first electrode, and the second electrode.

Referring to FIGS. 1 to 6, the electrode assembly manufacturing apparatus 100 according to the embodiment of the present invention refers to an apparatus for manufacturing the electrode assembly 10 by stacking the first electrode 11, the separator 14, and the second electrode 12.

The electrode assembly 10 may be a power generation element that may be charged or discharged. The electrode assembly 10 may be provided in the form in which the first electrode 11, the separator 14, and the second electrode 12 are alternately stacked. In this case, for example, in the electrode assembly 10, the separator 14 is folded in a zigzag manner, and the first electrode 11 and the second electrode 12 are alternately disposed between the folded separators 14. In this case, the separator 14 may surround an outermost periphery of the electrode assembly 10.

In addition, in the case of the electrode assembly 10 according to the present invention, all the surfaces of the first electrode 11 at the lowermost end of the electrode assembly 10 may be surrounded by the separator 14. In addition to all the surfaces of the first electrode 11, all the surfaces of the first electrode 11 at the uppermost end of the electrode assembly 10 may be additionally surrounded by the separator 14.

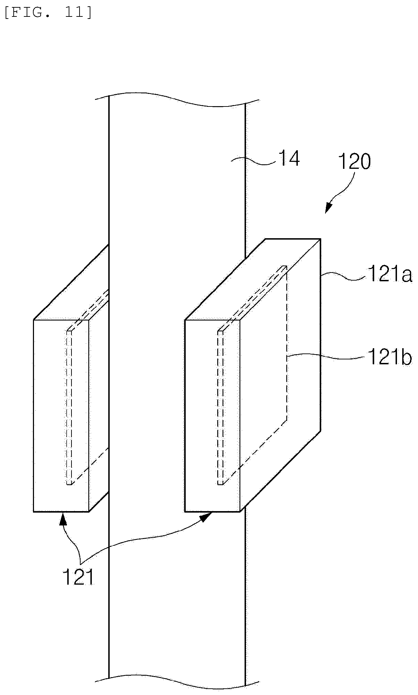

FIG. 11 is a perspective view illustrating the separator supply part of the electrode assembly manufacturing apparatus according to the embodiment of the present invention.

Referring to FIGS. 5 and 11, the separator supply part 120 may supply the separator 14 to the stack table 110 while heating the separator 14. More specifically, the separator supply part 120 may include a separator heating part 121 having a passageway through which the separator 14 passes and configured to heat the separator 14 passing through the passageway.

The separator heating part 121 may include a pair of bodies 121a, and a separator heater 121b configured to heat the bodies 121a. The pair of bodies 121a may be positioned to be spaced apart from each other at a predetermined distance so that the separator 14 may pass. In this case, for example, the separator 14 passes through the separator heating part 121 in a non-contact manner, and the separator 14 may be heated in a non-contact manner. Meanwhile, for example, the body 121a may be provided in the form of a quadrangular block.

Meanwhile, the separator supply part 120 may further include a separator roll 122 around which the separator 14 is wound. In this case, the separator 14 wound around the separator roll 122 may be gradually unwound and supplied to the stack table 110 while passing through the separator heating part 121.

That is, according to the embodiment of the present invention, in the step of supplying the separator to the stack table, the separator wound around the separator roll may be continuously supplied to the stack table while passing through the passageway formed to allow the separator to pass therethrough.

In addition, according to the embodiment of the present invention, the press part may further include a pair of pressing blocks and a press heater configured to heat the pressing block. The pair of pressing blocks may surface-press the stacked object while heating the stacked object by moving in the directions toward each other. That is, the press part may perform the electrode assembly manufacturing method further including the step of heating and pressing the stacked object.

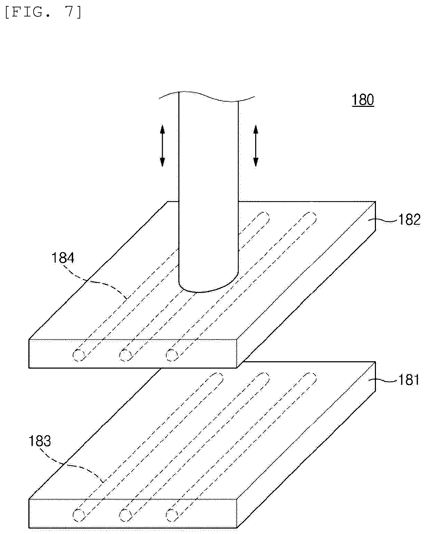

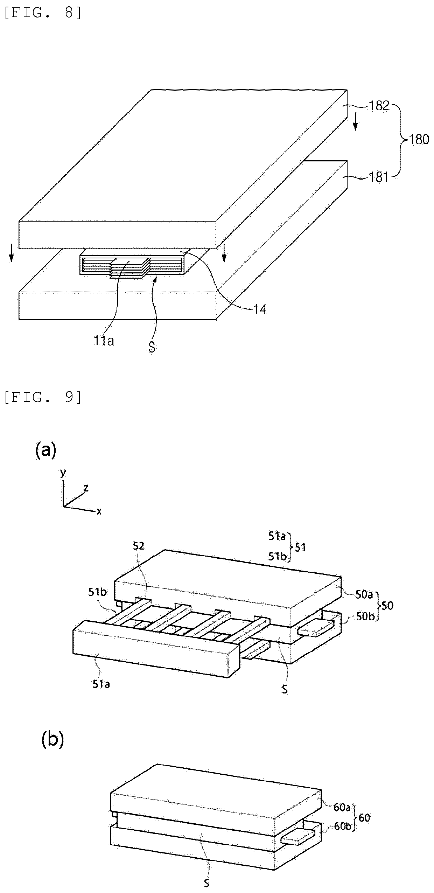

FIG. 7 is a perspective view illustrating the press part of the electrode assembly manufacturing apparatus that may perform the electrode assembly manufacturing method according to the embodiment of the present invention, and FIG. 8 is a perspective view exemplarily illustrating a state in which the press part of the electrode assembly manufacturing apparatus, which may perform the electrode assembly manufacturing method according to the embodiment of the present invention, presses the stacked object.

Referring to FIGS. 1 to 8, the press part 180 may bond the first electrode 11, the separator 14, and the second electrode 12 by pressing the first electrode 11, the separator 14, and the second electrode 12 that are stacked while being heated.

In addition, the press part 180 may include a pair of pressing blocks 181 and 182. The pair of pressing blocks 181 and 182 may surface-press a stacked object S made by stacking the first electrode 11, the separator 14, and the second electrode 12 while moving in the directions toward each other.

In this case, in case that the separator 14 surrounds the outer surface of the stacked object S, an outer portion of the separator 14 positioned at the outermost periphery of the stacked object S may be bonded to inner portions of the first electrode 11, the second electrode 12, and the separator 14 that face the outer portion of the separator 14. Therefore, it is possible to more effectively prevent the first electrode 11, the second electrode 12, and the separator 14 from deviating from their positions and prevent the stacked state from collapsing during the process of forming the electrode assembly 10 by stacking the first electrode 11, the separator 14, and the second electrode 12.

Further, the press part 180 may further include press heaters 183 and 184 configured to heat the pair of pressing blocks 181 and 182. The pair of pressing blocks 181 and 182 may heat and press the stacked object S of the first electrode 11, the separator 14, and the second electrode 12. Therefore, thermal bonding may be more properly performed between the first electrode 11, the separator 14, and the second electrode 12 at the time of pressing the stacked object S by the press part 180, such that the first electrode 11, the separator 14, and the second electrode 12 may be more securely bonded.

Pressing surfaces of the pair of pressing blocks 181 and 182 are formed as flat surfaces. Horizontal and vertical lengths of the pressing surface may be longer than horizontal and vertical lengths of the stacked object S made by stacking the first electrode 11, the separator 14, and the second electrode 12.

Further, the pair of pressing blocks 181 and 182 may include a first pressing block 181 and a second pressing block 182. The first pressing block 181 and the second pressing block 182 may each be provided in the form of a quadrangular block having a rectangular parallelepiped shape.

According to the embodiment of the present invention, the press part may include a first press part and a second press part. The first press part may be used for the first heat-press step, and the second press part may be used for the second heat-press step.

FIG. 9A is a perspective view illustrating a first press part 50 according to the embodiment of the present invention, and FIG. 9B is a perspective view illustrating a second press part 60 according to the embodiment of the present invention.

Referring to FIG. 9A, the first press part 50 may heat and press the stacked object S fixed by a gripper 51. The first press part 50 includes a pair of first pressing blocks 50a and 50b. All the pressing surfaces of the pair of first pressing blocks 50a and 50b may be provided as flat surfaces, except for a groove corresponding to a fixing part 51b of the gripper 51.

The gripper 51 may include: a main body 51a provided to correspond to a length x and a height y of the stacked object S or larger than the length x and the height y of the stacked object S; and the plurality of fixing parts 51b provided at one surface of the main body 51a and provided in a column or plate shape in a direction of a width z of the stacked object S. In this case, the length x of the stacked object S may mean a longest distance between one end and the other end of the stacked object S. The height y may mean a distance in a stack direction of the stacked object S. The width z may mean a distance traversing the upper surface of the stacked object S.

The position of the fixing part 51b may be adjusted in the height direction of the main body 51a. The fixing part 51b may fix the stacked object S by coming into contact with the upper and lower surfaces of the stacked object S. Thereafter, the pair of first pressing blocks 50a and 50b included in the first press part 50 may bond the electrode and the separator included in the stacked object S by surface-pressing one or more of the stacked object S and the gripper 51 while moving in the directions toward each other.

Referring to FIG. 9B, the second press part 60 may finally heat and press the stacked object S primarily heated and pressed by the first press part 50. The second press part 60 may include a pair of second pressing blocks 60a and 60b, and the pair of pressing blocks 61 and 62 may surface-press the stacked object S while moving in the directions toward each other. In addition, all the pressing surfaces of the pair of second pressing blocks 60a and 60b included in the second press part 60, which come into contact with and press the stacked object S, may be provided as flat surfaces.

The embodiment of the present invention may provide the electrode assembly manufacturing method, in which the step of supplying the first electrode to the stack table includes: seating the first electrode on a first electrode seating table before the first electrode is stacked on the stack table; and conveying the seated first electrode to the stack table by sucking the seated first electrode by vacuum, and the step of supplying the second electrode to the stack table includes: seating the second electrode on a second electrode seating table before the second electrode is stacked on the stack table; and conveying the seated second electrode to the stack table by sucking the seated second electrode by vacuum.

Based on the manufacturing apparatus, the first electrode supply part may include the first electrode seating table on which the first electrode is seated before the first electrode is stacked on the stack table by the first electrode stacking part. The second electrode supply part may include the second electrode seating table on which the second electrode is seated before the second electrode is stacked on the stack table by the second electrode stacking part.

In addition, in the manufacturing apparatus, the first electrode stacking part may include a first suction head configured to suck the first electrode seated on the first electrode seating table by vacuum. The second electrode stacking part may include a second suction head configured to suck the second electrode seated on the second electrode seating table by vacuum. That is, the suction head may suck the electrode by vacuum and convey the electrode to the stack table.

The electrode assembly manufacturing method according to the present invention may include, after the folding of the separator so that the separator surrounds all the surfaces of the electrode supplied first, alternately performing steps of: rotating the stack table toward one side to allow the stack table to face a stacked portion of the first electrode at the time of stacking the first electrode so that the separator is folded in a zigzag manner so as to be positioned between the first electrode and the second electrode; and rotating the stack table toward the other side to allow the stack table to face a stacked portion of the second electrode at the time of stacking the second electrode.

The manufacturing method will be more specifically described with reference to the manufacturing apparatus as an example. The manufacturing apparatus may further include a rotating part configured to rotate the stack table. The first electrode stacking part is provided at one side of the rotating part, and the second electrode stacking part is provided at the other side of the rotating part, such that the separator may be folded in a zigzag manner so as to be positioned between the first electrode and the second electrode. The rotating part may alternately perform the operation of rotating the stack table toward one side to allow the stack table to face the first suction head of the first electrode stacking part at the time of stacking the first electrode and the operation of rotating the stack table toward the other side to allow the stack table to face the second suction head of the second electrode stacking part at the time of stacking the second electrode.

In this case, the rotating of the stack table so that the stack table faces the suction head means that the stack table is rotated to face a stacked portion of the electrode in the manufacturing method.

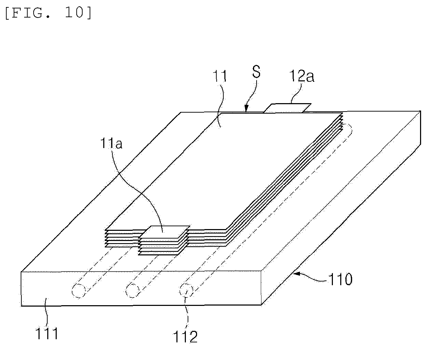

FIG. 10 is a perspective view illustrating the stack table of the electrode assembly manufacturing apparatus that may perform the electrode assembly manufacturing method according to the present invention.

Referring to FIGS. 1 to 6 and 10, the first electrode 11, the separator 14, and the second electrode 12 may be stacked on the stack table 110 so that the first electrode 11 and the second electrode 12 are alternately disposed between the folded separators 14.

In addition, the stack table 110 may include a table body 111 on which the first electrode 11, the separator 14, and the second electrode 12 are stacked, and a stack table heater 112 configured to heat the stacked object S by heating the table body 111.

The first electrode 11 may be a positive electrode, and the second electrode 12 may be a negative electrode, but the present invention is not necessarily limited thereto. For example, the first electrode 11 may be a negative electrode, and the second electrode 12 may be a positive electrode.

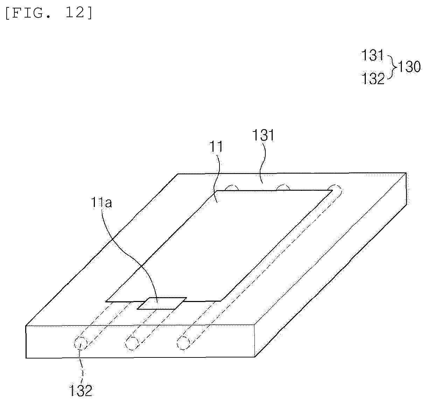

FIG. 12 is a perspective view illustrating the first electrode seating table of the electrode assembly manufacturing apparatus that may perform the electrode assembly manufacturing method according to the present invention.

Referring to FIGS. 1 to 6 and 12, the first electrode supply part 130 may supply the first electrode 11 to the first electrode stacking part 150 while heating the first electrode 11.

In addition, the first electrode supply part 130 may include: a first electrode seating table 131 on which the first electrode 11 is seated before the first electrode 11 is stacked on the stack table 110 by the first electrode stacking part 150; and a first electrode heater 132 configured to heat the first electrode 11 by heating the first electrode seating table 131.

Meanwhile, the first electrode supply part 130 may further include: a first electrode roll 133 around which the first electrode 11 is wound in the form of a sheet; a first cutter 134 configured to form the first electrode 11 having a predetermined size by cutting the first electrode 11 at a predetermined interval when the first electrode 11 wound in the form of a sheet around the first electrode roll 133 is unwound and supplied; a first conveyor belt 135 configured to convey the first electrode 11 cut by the first cutter 134; and a first electrode supply head 136 configured to suck the first electrode 11, which is conveyed by the first conveyor belt 135, by vacuum and seat the first electrode 11 on the first electrode seating table 131. In this case, the first cutter 134 may cut the first electrode 11 in the form of a sheet so that a first electrode tab 11a protrudes from an end of the first electrode 11.

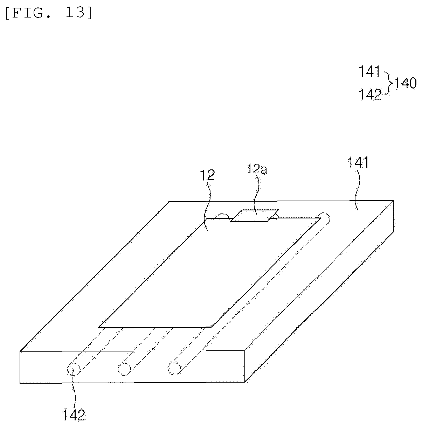

FIG. 13 is a perspective view illustrating the second electrode seating table of the electrode assembly manufacturing apparatus that may perform the electrode assembly manufacturing method according to the present invention.

Referring to FIGS. 1 to 6 and 13, the second electrode supply part 140 may supply the second electrode 12 to the second electrode stacking part 160 while heating the second electrode 12.

In addition, the second electrode supply part 140 may include: a second electrode seating table 141 on which the second electrode 12 is seated before the second electrode 12 is stacked on the stack table 110 by the second electrode stacking part 160; and a second electrode heater 142 configured to heat the second electrode 12 by heating the second electrode seating table 141.

Meanwhile, the second electrode supply part 140 may further include: a second electrode roll 143 around which the second electrode 12 is wound in the form of a sheet; a second cutter 144 configured to form the second electrode 12 having a predetermined size by cutting the second electrode 12 at a predetermined interval when the second electrode 12 wound in the form of a sheet around the second electrode roll 143 is unwound and supplied; a second conveyor belt 145 configured to convey the second electrode 12 cut by the second cutter 144; and a second electrode supply head 146 configured to suck the second electrode 11, which is conveyed by the second conveyor belt 145, by vacuum and seat the second electrode 11 on the second electrode seating table 141. In this case, the second cutter 144 may cut the second electrode 12 in the form of a sheet so that a second electrode tab 12a protrudes from an end of the second electrode 11.

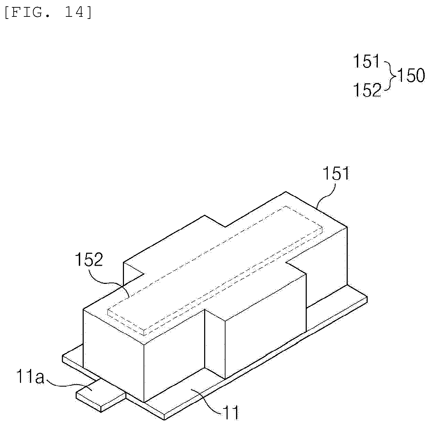

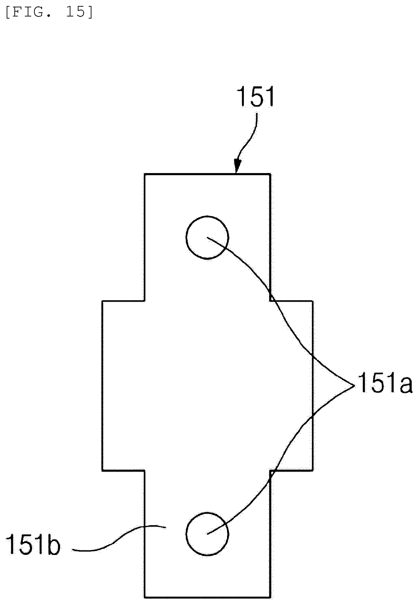

FIG. 14 is a perspective view illustrating a first suction head of the electrode assembly manufacturing apparatus, and FIG. 15 is a bottom plan view illustrating the first suction head of the electrode assembly manufacturing apparatus.

Referring to FIGS. 1 to 6, 14, and 15, the first electrode stacking part 150 may stack the first electrode 11 on the stack table 110.

In addition, the first electrode stacking part 150 may include a first suction head 151, a first head heater 152, and a first movement part 153.

The first suction head 151 may suck, by vacuum, the first electrode 11 seated on the first electrode seating table 131. In this case, the first suction head 151 has a vacuum inlet 151a formed in a bottom surface 151b and sucks the first electrode 11 through the vacuum inlet 151a, thereby fixing the first electrode 11 on the bottom surface 151b of the first suction head 151. In this case, the first suction head 151 may have therein a passageway that connects the vacuum inlet 151a and a vacuum suction device (not illustrated).

The first head heater 152 may heat the first suction head 151 and heat the first electrode 11, which is sucked by the first suction head 151, by heating the first suction head 151.

The first movement part 153 may move the first suction head 151 to the stack table 110 so that the first suction head 151 may stack the first electrode 11, which is seated on the first electrode seating table 131, on the stack table 110.

Meanwhile, referring to FIGS. 1 to 6, the second electrode stacking part 160 may stack the second electrode 12 on the stack table 110. In this case, the second electrode stacking part 160 may have the same structure as the first electrode stacking part 150. In this case, the second electrode stacking part 160 may include a second suction head 161, a second head heater (not illustrated), and a second movement part 163.

The second suction head 161 may suck, by vacuum, the second electrode 12 seated on the second electrode seating table 141.

The second head heater may heat the second suction head 161 and heat the second electrode 12, which is sucked by the second suction head 161, by heating the second suction head 161.

The second movement part 163 may move the second suction head 161 to the stack table 110 so that the second suction head 161 may stack the second electrode 12, which is seated on the second electrode seating table 141, on the stack table 110.

The embodiment of the present invention may provide the electrode assembly manufacturing method further including: after the folding of the separator so that the separator completely surrounds the electrode supplied first, fixing the first electrode or the second electrode to the stack table by holding the first electrode or the second electrode by using the holding mechanism at the time of stacking the first electrode or the second electrode on the stack table.

According to the embodiment of the present invention, the holding mechanism may press and fix the upper surface of the first electrode stacked at an uppermost side of the stack table at the time of stacking the first electrode on the stack table and press and fix an upper surface of the second electrode stacked at the uppermost side of the stack table at the time of stacking the second electrode on the stack table.

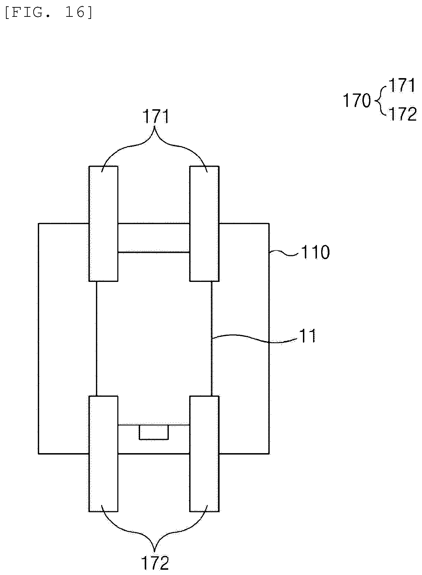

FIG. 16 is a top plan view illustrating the holding mechanism and the stack table of the electrode assembly manufacturing apparatus that may perform the electrode assembly manufacturing method according to the present invention.

Referring to FIGS. 1 to 6 and 16, the holding mechanism 170 may hold and fix the first electrode 11 or the second electrode 12 to the stack table 110 at the time of stacking the first electrode 11 or the second electrode 12 on the stack table 110.

In addition, the holding mechanism 170 may press and fix the upper surface of the first electrode 11 stacked at the uppermost side of the stack table 110 at the time of stacking the first electrode 11 on the stack table 110 and press and fix the upper surface of the second electrode 12 stacked at the uppermost side of the stack table 110 at the time of stacking the second electrode 12 on the stack table 110.

That is, at the time of forming the stacked object so that the first electrode 11 and the second electrode 12 are stacked to be positioned between the separators 14, the holding mechanism 170 may hold the stacked object by pressing the surface positioned at the uppermost side of the stacked object in the direction toward the stack table 110, thereby preventing the stacked object from separating from the stack table 110.

Meanwhile, for example, the holding mechanism 170 may include a first holding mechanism 171 and a second holding mechanism 172 and fix two opposite sides of the first electrode 11 or the second electrode 12.

Further, for example, when the holding mechanism 170 holds the first electrode 11 or the second electrode 12 and then the stack table 110 rotates, the separator 14 may be unwound from the separator roll 122 in proportion to the rotation amount of the stack table 110 and supplied to the stack table 110.

Meanwhile, for example, the holding mechanism 170 and the stack table 110 may be connected or coupled to a rotation device (not illustrated). In this case, for example, the rotation device may be configured as a mandrel. In this case, when the holding mechanism 170 holds the first electrode 11 or the second electrode 12, the rotation device may rotate the holding mechanism 170 and the stack table 110.

Referring to FIGS. 1 to 6 and 16, the holding mechanism 170 may hold and fix the first electrode 11 or the second electrode 12 to the stack table 110 at the time of stacking the first electrode 11 or the second electrode 12 on the stack table 110.

An operation of the electrode assembly manufacturing apparatus 100, which may perform the electrode assembly manufacturing method of the present invention will be described with reference to FIGS. 2 to 4. The separator 14 wound around the separator roll 122 is supplied while being heated by passing through the separator heating part 121 and stacked on the stack table 110, and the separator 14 is heated by the heated stack table 110.

Further, when the first electrode 11 is heated and supplied from the first electrode supply part 130 to the first electrode stacking part 150, the first electrode stacking part 150 stacks the first electrode 11 on the upper surface of the separator 14 stacked on the stack table 110 while heating the first electrode 11.

In this case, the holding mechanism 170 presses the upper surface of the first electrode 11, thereby fixing the first electrode 11 so that the first electrode 11 does not separate from the stack table 110.

Thereafter, when the stack table 110 rotates in the direction toward the second electrode stacking part 160, the separator 14 is continuously supplied and covers the upper surface of the first electrode 11.

Further, the second electrode stacking part 160 stacks the second electrode 12, which is heated and supplied from the second electrode supply part 140, on a portion of the separator 14 that covers the upper surface of the first electrode 11. In this case, the second electrode stacking part 160 continuously heats the second electrode 12 as the second suction head 161 presses and heats the second electrode 12.

In this case, the holding mechanism 170, which presses the upper surface of the first electrode 11, moves away from the pressing portion and then presses the upper surface of the second electrode 12, thereby preventing the stacked object including the second electrode 12 from separating from the stack table 110.

Thereafter, the process of stacking the first electrode 11 and the second electrode 12 is repeated, such that the separator 14 is folded in a zigzag manner, and the stacked object may be formed in which the separator 14 is positioned between the first electrode 11 and the second electrode 12.

Further, the electrode assembly 10 may be manufactured by moving the stacked object to the press part 180 and bonding the first electrode 11, the separator 14, and the second electrode 12 which are pressed and heated when the press part 180 presses the stacked object while applying heat to the stacked object. In this case, the first electrode 11, the separator 14, and the second electrode 12, which are heated, may be thermally bonded as the press part 180 presses the first electrode 11, the separator 14, and the second electrode 12 while applying heat to the first electrode 11, the separator 14, and the second electrode 12.

The electrode assembly manufacturing apparatus 100, which is configured as described above and may perform the electrode assembly manufacturing method of the present invention, stacks the first electrode 11, the separator 14, and the second electrode 12 while heating the first electrode 11, the separator 14, and the second electrode 12 and bonds the first electrode 11, the separator 14, and the second electrode 12 by pressing and heating the first electrode 11, the separator 14, and the second electrode 12 by using the press part 180. Therefore, it is possible to prevent the electrode assembly 10 from being unfolded and prevent the first electrode 11 and the second electrode 12 from deviating from the stacking positions on the electrode assembly 10.

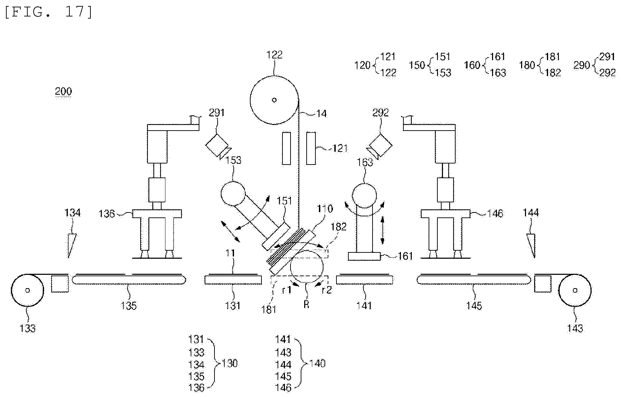

The electrode assembly manufacturing apparatus, which may perform the electrode assembly manufacturing method of the present invention, may further include a vision device configured to inspect the first electrode or the second electrode. FIG. 17 is a front view illustrating a concept of the electrode assembly manufacturing apparatus further including the vision device.

In FIG. 17, the holding mechanism is omitted for convenience, and the press part 180 positioned at the rear side of the top plan view is indicated by the dotted line.

Referring to FIG. 17, an electrode assembly manufacturing apparatus 200 may include: the stack table 110, the separator supply part 120 configured to supply the separator 14, the first electrode supply part 130 configured to supply the first electrode 11, the second electrode supply part 140 configured to supply the second electrode 12, the first electrode stacking part 150 configured to stack the first electrode 11 on the stack table 110, the second electrode stacking part 160 configured to stack the second electrode 12 on the stack table 110, the press part 180 configured to bond the first electrode 11, the separator 14, and the second electrode 12, and the holding mechanism 170 configured to fix the first electrode 11 and the second electrode 12 at the time of stacking the first electrode 11 and the second electrode 12 on the stack table 110 (see FIG. 12). The electrode assembly manufacturing apparatus 200 may further include a vision device 290 configured to vision-inspect the first and second electrodes 11 and 12 and the rotation part R for rotating the stack table 110.

In more detail, the vision device 290 of the electrode assembly manufacturing apparatus 200 according to another embodiment of the present invention may include a first camera 291 and a second camera 292.

The first camera 291 may capture an image of the first electrode 11 seated on the first electrode seating table 131 of the first electrode supply part 130. The second camera 292 may capture an image of the second electrode 12 seated on the second electrode seating table 141 of the second electrode supply part 140.

It is possible to inspect the stack quality of the first electrode 11 and the second electrode 12 on the basis of image information acquired by the first camera 291 and the second camera 292. In this case, it is possible to inspect seating position, sizes, stacked states, and the like of the first electrode 11 and the second electrode 12.

The rotation part R may rotate the stack table 110 in one direction r1 and the other direction r2. In this case, the first electrode stacking part 150 may be provided at one side of the rotation part R, and the first electrode stacking part 150 may be provided at the other side of the rotation part R.

In addition, the rotation part R may rotate the stack table 110 toward one side so that the stack table 110 faces the first suction head 151 at the time of stacking the first electrode 11. The rotation part R may rotate the stack table 110 toward the other side so that the stack table 110 faces the second suction head 161 at the time of stacking the second electrode 12.

Further, the rotation part R may alternatingly rotate the stack table 110 in the direction toward the first electrode stacking part 150 and the direction toward the second electrode stacking part 160, such that the separator 14 may be folded in a zigzag manner (zig zag folding) so as to be positioned between the first electrode 11 and the second electrode 12.

The embodiment of the present invention provides the electrode assembly that is manufactured by the manufacturing method and configured such that the first electrode and the second electrode are alternatingly disposed between the folded separators, and all the surfaces of the electrode at the lowermost end of the assembly are surrounded by the separator.

In addition, the descriptions related to the configuration of the electrode assembly according to the present invention and the configuration of the manufacturing apparatus, which may perform the electrode assembly manufacturing method of the present invention, may also be applied to the manufacturing method according to the present invention and the electrode assembly manufactured by the manufacturing method.

## Claims

1. A method of manufacturing an electrode assembly (10), in which a first electrode (11) and a second electrode (12) are alternately disposed between folded separator (14), the method comprising:
supplying the first electrode (11) to a stack table (110);
supplying the second electrode (12) to the stack table (110);
supplying the separator (14) to the stack table (110);
winding the first electrode (11), which is stacked on the stack table (110) first after the separator (14) is stacked on the stack table (110) first, with the separator (14) one or more times, wherein winding the first electrode (11) with the separator (14) one or more times comprises folding the separator (14) so that the separator (14) surrounds all of the surfaces of the first electrode (11); and
manufacturing a stacked object (S) by stacking the first electrode (11), the separator (14), and the second electrode (12) on the stack table (110) such that the first electrode (11) and the second electrode (12) are alternatingly disposed between the folded separator (14) while stacking the second electrode (12) after the winding of the first electrode (11) with the separator (14) one or more times.

2. The method of claim 1, wherein the supplying of the first electrode (11) to the stack table (110), the supplying of the second electrode (12) to the stack table (110), and the supplying of the separator (14) to the stack table (110) including supplying the first electrode (11), the second electrode (12), and the separator (14) to the stack table (110) while heating the first electrode (11), the second electrode (12), and the separator (14).

3. The method of claim 1, further comprising:
gripping the first electrode (11) or the second electrode (12) stacked on the stack table (110) by using a holding mechanism (170) and fixing the first electrode (11) or the second electrode (12) to the stack table (110).

4. The method of claim 1, further comprising:
a heat-press step of heating and pressing the stacked object (S).

5. The method of claim 4, wherein the heat-press step of heating and pressing the stacked object (S) comprises:
heating the stacked object (S) by heating a body (121a) of the stack table (110); and
surface-pressing the stacked object (S) with a pair of pressing blocks (181, 182) that moves in directions toward each other along a stack axis.

6. The method of claim 1, wherein in the step of supplying the separator (14) to the stack table (110), the separator (14) is wound around a separator roll (122) and continuously supplied to the stack table (110) while passing through a passageway formed to allow the separator (14) to pass therethrough.

7. The method of claim 1, wherein the step of supplying the first electrode (11) to the stack table (110) comprises:
seating the first electrode (11) on a first electrode seating table (131) before the first electrode (11) is stacked on the stack table (110); and
conveying the seated first electrode (11) to the stack table by sucking the seated first electrode with a vacuum, and
wherein the step of supplying the second electrode (12) to the stack table (110) comprises:
seating the second electrode (12) on a second electrode seating table (141) before the second electrode (12) is stacked on the stack table (110); and
conveying the seated second electrode (12) to the stack table (110) by sucking the seated second electrode (12) by vacuum.

8. The method of claim 1, further comprising:
after the folding of the separator (14) so that the separator (14) surrounds all surfaces of the electrode supplied first, alternatingly performing steps of:
rotating the stack table (110) toward one side to allow the stack table (110) to face a stacked portion of the first electrode (11) at the time of stacking the first electrode (11) so that the separator (14) is folded in a zigzag manner so as to be positioned between the first electrode (11) and the second electrode (12); and
rotating the stack table (110) toward the other side to allow the stack table (110) to face a stacked portion of the second electrode (12) at the time of stacking the second electrode (12).

9. The method of claim 1, further comprising:
after the folding of the separator (14) so that the separator (14) completely surrounds the electrode supplied first, fixing the first electrode (11) or the second electrode (12) to the stack table (110) by holding the first electrode (11) or the second electrode (12) by using a holding mechanism (170) at the time of stacking the first electrode (11) or the second electrode (12) on the stack table (110).

10. The method of claim 9, wherein the holding mechanism (170) presses and fixes an upper surface of the first electrode (11) stacked at an uppermost side of the stack table (110) at the time of stacking the first electrode (11) on the stack table (110) and presses and fixes an upper surface of the second electrode (12) stacked at the uppermost side of the stack table (110) at the time of stacking the second electrode (12) on the stack table (110).

11. An electrode assembly (10) manufactured by the manufacturing method according to any one of claims 1 to 10, wherein the electrode assembly (10) is configured such that the first electrode (11) and the second electrode (12) are alternately disposed between the folded separator (14), and all surfaces of the electrode at a lowermost end of the electrode assembly (10) are surrounded by the separator (14).

## Patentansprüche

1. Verfahren zur Herstellung einer Elektrodenanordnung (10), in welcher eine erste Elektrode (11) und eine zweite Elektrode (12) abwechselnd zwischen einem gefalteten Separator (14) angeordnet sind, wobei das Verfahren umfasst:
Zuführen der ersten Elektrode (11) zu einem Stapeltisch (110);
Zuführen der zweiten Elektrode (12) zu dem Stapeltisch (110);
Zuführen des Separators (14) zu dem Stapeltisch (110);
einmaliges oder mehrmaliges Wickeln der ersten Elektrode (11), welche an dem Stapeltisch (110) zuerst gestapelt ist, nachdem der Separator (14) an dem Stapeltisch (110) zuerst gestapelt ist, mit dem Separator (14), wobei das einmalige oder mehrmalige Wickeln der ersten Elektrode (11) mit dem Separator (14) ein Falten des Separators (14) umfasst, so dass der Separator (14) alle der Flächen der ersten Elektrode (11) umgibt; und
Herstellen eines gestapelten Objekts (S) durch Stapeln der ersten Elektrode (11), des Separators (14) und der zweiten Elektrode (12) an dem Stapeltisch (110) derart, dass die erste Elektrode (11) und die zweite Elektrode (12) abwechselnd zwischen dem gefalteten Separator (14) angeordnet sind, während des Stapelns der zweiten Elektrode (12) nach dem einmaligen oder mehrmaligen Wickeln der ersten Elektrode (11) mit dem Separator (14).

2. Verfahren nach Anspruch 1, wobei das Zuführen der ersten Elektrode (11) zu dem Stapeltisch (110), das Zuführen der zweiten Elektrode (12) zu dem Stapeltisch (110) und das Zuführen des Separators (14) zu dem Stapeltisch (110) ein Zuführen der ersten Elektrode (11), der zweiten Elektrode (12) und des Separators (14) zu dem Stapeltisch (110) umfasst, während eines Erwärmens der ersten Elektrode (11), der zweiten Elektrode (12) und des Separators (14).

3. Verfahren nach Anspruch 1, ferner umfassend:
Greifen der ersten Elektrode (11) oder der zweiten Elektrode (12), welche an dem Stapeltisch (110) gestapelt sind, durch Verwenden eines Haltemechanismus (170), und Fixieren der ersten Elektrode (11) oder der zweiten Elektrode (12) an dem Stapeltisch (110).

4. Verfahren nach Anspruch 1, ferner umfassend:
einen Wärme-Press-Schritt eines Erwärmens und Pressens des gestapelten Objekts (S).

5. Verfahren nach Anspruch 4, wobei der Wärme-Press-Schritt des Erwärmens und Pressens des gestapelten Objekts (S) umfasst:
Erwärmen des gestapelten Objekts (S) durch Erwärmen eines Körpers (121a) des Stapeltischs (110); und
Flächenpressen des gestapelten Objekts (S) mit einem Paar Pressblöcke (181, 182), welche sich in Richtungen aufeinander zu entlang einer Stapelachse bewegen.

6. Verfahren nach Anspruch 1, wobei in dem Schritt des Zuführens des Separators (14) zu dem Stapeltisch (110) der Separator (14) um eine Separatorrolle (122) gewickelt wird und kontinuierlich zu dem Stapeltisch (110) zugeführt wird, während eines Durchtretens durch einen Durchgang, welcher gebildet ist, um dem Separator (14) zu ermöglichen, dort hindurchzutreten.

7. Verfahren nach Anspruch 1, wobei der Schritt des Zuführens der ersten Elektrode (11) zu dem Stapeltisch (110) umfasst:
Lagern der ersten Elektrode (11) an einem ersten Elektrodenlagerungstisch (131), bevor die erste Elektrode (11) an dem Stapeltisch (110) gestapelt wird; und
Fördern der gelagerten ersten Elektrode (11) zu dem Stapeltisch durch Ansaugen der gelagerten ersten Elektrode mit einem Vakuum, und
wobei der Schritt des Zuführens der zweiten Elektrode (12) zu dem Stapeltisch (110) umfasst:
Lagern der zweiten Elektrode (12) an einem zweiten Elektrodenlagerungstisch (141), bevor die zweite Elektrode (12) an dem Stapeltisch (110) gestapelt wird; und
Fördern der gelagerten zweiten Elektrode (12) zu dem Stapeltisch (110) durch Ansaugen der gelagerten zweiten Elektrode (12) durch Vakuum.

8. Verfahren nach Anspruch 1, ferner umfassend:
nach dem Falten des Separators (14), so dass der Separator (14) alle Flächen der Elektrode, welche zuerst zugeführt wird, umgibt, abwechselndes Durchführen von Schritten:
Rotieren des Stapeltischs (110) in Richtung einer Seite, um dem Stapeltisch (110) zu ermöglichen, einem gestapelten Abschnitt der ersten Elektrode (11) zu dem Zeitpunkt eines Stapelns der ersten Elektrode (11) zugewandt zu sein, so dass der Separator (14) in einer Zickzack-Weise derart gefaltet wird, dass dieser zwischen der ersten Elektrode (11) und der zweiten Elektrode (12) positioniert wird; und
Rotieren des Stapeltischs (110) in Richtung der anderen Seite, um dem Stapeltisch (110) zu ermöglichen, einem gestapelten Abschnitt der zweiten Elektrode (12) zu dem Zeitpunkt eines Stapelns der zweiten Elektrode (12) zugewandt zu sein.

9. Verfahren nach Anspruch 1, ferner umfassend:
nach dem Falten des Separators (14), so dass der Separator (14) die Elektrode vollständig umgibt, welche zuerst zugeführt wird, Fixieren der ersten Elektrode (11) oder der zweiten Elektrode (12) an dem Stapeltisch (110) durch Halten der ersten Elektrode (11) oder der zweiten Elektrode (12) unter Verwendung eines Haltemechanismus (170) zu dem Zeitpunkt eines Stapelns der ersten Elektrode (11) oder der zweiten Elektrode (12) an dem Stapeltisch (110).

10. Verfahren nach Anspruch 9, wobei der Haltemechanismus (170) eine obere Fläche der ersten Elektrode (11), welche an einer obersten Seite des Stapeltischs (110) gestapelt ist, zu dem Zeitpunkt eines Stapelns der ersten Elektrode (11) an dem Stapeltisch (110) presst und fixiert und eine obere Fläche der zweiten Elektrode (12), welche an der obersten Seite des Stapeltischs (110) gestapelt ist, zu dem Zeitpunkt eines Stapelns der zweiten Elektrode (12) an dem Stapeltisch (110) presst und fixiert.

11. Elektrodenanordnung (10), welche durch das Herstellungsverfahren nach einem der Ansprüche 1 bis 10 hergestellt ist, wobei die Elektrodenanordnung (10) derart eingerichtet ist, dass die erste Elektrode (11) und die zweite Elektrode (12) abwechselnd zwischen dem gefalteten Separator (14) angeordnet sind und alle Flächen der Elektrode an dem untersten Ende der Elektrodenanordnung (10) durch den Separator (14) umgeben sind.

## Revendications

1. Procédé de fabrication d'un ensemble électrode (10), dans lequel une première électrode (11) et une seconde électrode (12) sont disposées alternativement entre un séparateur plié (14), le procédé comprenant :
la fourniture de la première électrode (11) à une table d'empilage (110) ;
la fourniture de la seconde électrode (12) à la table d'empilage (110) ;
la fourniture du séparateur (14) à la table d'empilage (110) ;
l'enroulement de la première électrode (11), qui est d'abord empilée sur la table d'empilage (110) une fois le séparateur (14) empilé sur la table d'empilage (110) en premier, avec le séparateur (14) une ou plusieurs fois, dans lequel l'enroulement de la première électrode (11) avec le séparateur (14) une ou plusieurs fois comprend le pliage du séparateur (14) de sorte que le séparateur (14) entoure toutes les surfaces de la première électrode (11) ; et
la fabrication d'un objet empilé (S) en empilant la première électrode (11), le séparateur (14) et la seconde électrode (12) sur la table d'empilage (110), de sorte que la première électrode (11) et la seconde électrode (12) soient disposées alternativement entre le séparateur plié (14), tout en empilant la seconde électrode (12) après avoir enroulé la première électrode (11) avec le séparateur (14) une ou plusieurs fois.

2. Procédé selon la revendication 1, dans lequel la fourniture de la première électrode (11) à la table d'empilage (110), la fourniture de la seconde électrode (12) à la table d'empilage (110) et la fourniture du séparateur (14) à la table d'empilage (110) incluant la fourniture de la première électrode (11), de la seconde électrode (12) et du séparateur (14) à la table d'empilage (110) tout en chauffant la première électrode (11), la seconde électrode (12) et le séparateur (14).

3. Procédé selon la revendication 1, comprenant en outre :
la saisie de la première électrode (11) ou de la seconde électrode (12) empilée sur la table d'empilage (110) à l'aide d'un mécanisme de maintien (170) et la fixation de la première électrode (11) ou de la seconde électrode (12) à la table d'empilage (110).

4. Procédé selon la revendication 1, comprenant en outre :
une étape de chauffage-pressage pour chauffer et presser l'objet empilé (S).

5. Procédé selon la revendication 4, dans lequel l'étape de chauffage-pressage pour chauffer et presser l'objet empilé (S) comprend :
le chauffage de l'objet empilé (S) en chauffant un corps (121a) de la table d'empilage (110) ; et
le pressage superficiel de l'objet empilé (S) à l'aide d'une paire de blocs presseurs (181, 182) qui se déplacent dans des directions les rapprochant l'un de l'autre le long d'un axe d'empilement.

6. Procédé selon la revendication 1, dans lequel, lors de l'étape de fourniture du séparateur (14) à la table d'empilage (110), le séparateur (14) est enroulé autour d'un rouleau (122) de séparateur et est fourni en continu à la table d'empilage (110) tout en passant par un passage formé pour permettre au séparateur (14) de passer à travers celui-ci.

7. Procédé selon la revendication 1, dans lequel l'étape de fourniture de la première électrode (11) à la table d'empilage (110) comprend :
le positionnement de la première électrode (11) sur une première table de positionnement d'électrode (131) avant que la première électrode (11) ne soit empilée sur la table d'empilage (110) ; et
le transport de la première électrode (11) en position vers la table d'empilage en aspirant la première électrode en position par une application de vide, et
dans lequel l'étape de fourniture de la seconde électrode (12) à la table d'empilage (110) comprend :
le positionnement de la seconde électrode (12) sur une seconde table de positionnement d'électrode (141) avant que la seconde électrode (12) ne soit empilée sur la table d'empilage (110) ; et
le transport de la seconde électrode (12) en position vers la table d'empilage (110) par aspiration de la seconde électrode (12) en position par application de vide.

8. Procédé selon la revendication 1, comprenant en outre :
après le pliage du séparateur (14) de sorte que le séparateur (14) entoure toutes les surfaces de l'électrode fournie en premier, l'exécution alternée des étapes de :
rotation de la table d'empilage (110) d'un côté pour permettre à la table d'empilage (110) de faire face à une partie empilée de la première électrode (11) au moment d'empiler la première électrode (11), de sorte que le séparateur (14) soit plié en zigzag afin d'être positionné entre la première électrode (11) et la seconde électrode (12) ; et
rotation de la table d'empilage (110) de l'autre côté pour permettre à la table d'empilage (110) de faire face à une partie empilée de la seconde électrode (12) au moment d'empiler la seconde électrode (12).

9. Procédé selon la revendication 1, comprenant en outre :
après le pliage du séparateur (14) de sorte que le séparateur (14) entoure complètement l'électrode fournie en premier, la fixation de la première électrode (11) ou de la seconde électrode (12) à la table d'empilage (110) en maintenant la première électrode (11) ou la seconde électrode (12) à l'aide d'un mécanisme de maintien (170) au moment d'empiler la première électrode (11) ou la seconde électrode (12) sur la table d'empilage (110).

10. Procédé selon la revendication 9, dans lequel le mécanisme de maintien (170) presse et fixe une surface supérieure de la première électrode (11) empilée sur un côté le plus haut de la table d'empilage (110) au moment d'empiler la première électrode (11) sur la table d'empilage (110) et presse et fixe une surface supérieure de la seconde électrode (12) empilée sur le côté le plus haut de la table d'empilage (110) au moment d'empiler la seconde électrode (12) sur la table d'empilage (110).

11. Ensemble électrode (10) fabriqué par le procédé de fabrication selon l'une quelconque des revendications 1 à 10, dans lequel l'ensemble électrode (10) est configuré de sorte que la première électrode (11) et la seconde électrode (12) sont disposées alternativement entre le séparateur plié (14), et que toutes les surfaces de l'électrode à une extrémité la plus basse de l'ensemble d'électrodes (10) soient entourées du séparateur (14).
